# EUROPEAN PATENT APPLICATION

(11) **EP 1 478 154 A1**
(43) Date of publication of application: **17.11.2004**
(21) Application number: 03010834.4
(22) Date of filing: 14.05.2003
(51) Int. Cl.: H04L 29/06, H04L 12/28

(54) **Method for serving user requests**

(71) Applicant: Sony International (Europe) GmbH, 10785 Berlin (DE)
(72) Inventor: Torge, Sunna, Stuttgart Technology Center, 70327 Stuttgart (DE); Rapp, Stefan, Stuttgart Technology Center, 70327 Stuttgart (DE)
(74) Representative: Müller - Hoffmann & Partner

(57) **Abstract**

A method for serving user requests is proposed wherein for each device at least one abstract function model (33-1, ..., 33-4) is generated. Further, a given user request is modeled and represented in an abstract way by generating an abstract task model thereof. Additionally, a plurality of abstract function models (33-1, ..., 33-4) of distinct devices is combined and/or formally merged and/or modeled via a set of ordered external models, thereby yielding an abstract and virtual device model which models the functionalities of the combined single devices.

## Description

The present invention relates to a method for serving user requests with respect to a network of devices and, more particular, to a method for operating a man-machine-interface unit in which complex user wishes or tasks can be realized.

Nowadays, a large variety of equipment and appliances employ man-machine-interface techniques, man-machine-dialogue systems, and/or the like, to ensure an easy and reliable use of the equipment and to increase the user's convenience, in particular in the field of network or home-network arrangements employing a variety of different devices connected thereto and offering a variety of possible services to the user.

In prior art methods and systems for serving user requests and/or for operating man-machine-interface units, in particular in the field of home networks, direct and more or less precise commands are expected by a dialogue manager of said man-machine-interface unit to map the received command uttered by a user directly to an action of a certain device. Therefore, in prior art methods and systems the user has to be aware of the devices and capabilities of the network and has to think in terms of concrete devices and actions.

It is an object of the present invention to provide a method for serving user requests with respect to a network of devices which can respond in a more flexible and more reliable manner to complex user wishes or tasks.

The object is achieved by a method for serving user requests with respect to a network of devices with the features of independent claim 1. Preferred embodiments of the inventive methods for serving user requests with respect to a network of devices are within the scope of the dependent sub-claims. Additionally, the object is achieved by a network of devices, a man-machine-interface unit or a system for controlling the same according to the features of claim 29 and by a computer program product according to the features of claim 30.

In the inventive method for serving user requests with respect to a network of devices and in particular for controlling said network of devices for each device and/or for device classes in the network at least one abstract and individual function model is generated, provided, and/or employed for modeling for each of said devices and/or for each device class its functionalities in an abstract way. Further, a given user request is in each case modeled and/or represented in an abstract way by generating, providing, and/or employing an abstract task model thereof. Additionally, a plurality of abstract and individual function models of distinct individual and single devices is combined, in particular by using external models, and/or formally merged and/or modeled via an ordered set of external models, thereby yielding an abstract and virtual device model which models in an abstract way the functionalities of the combined models of the respective distinct and/or combined single devices.

It is therefore a first basic idea of the invention to model and represent not only individual devices and/or device classes in the network in an abstract manner, but also to model and represent in each case a received and given user request within an abstract task model. Such an abstract modeling and/or representation enables in a particular flexible and reliable manner the finding of a plan or strategy to serve user requests on the basis of devices and device classes contained in the network.

It is a second basic idea of the invention not only to model and represent given individual and single devices and/or device classes contained in the network by abstract and individual function models to model the functionalities thereof, but also to create an abstract description of combinations or of the overall system or of network of the single devices or of parts thereof to represent and describe the functionalities of the combination of the single devices. This measure allows a further particular and reliable finding of a strategy for serving a given user request, a finding which might be more or less devicé independent.

The basic aspects of the invention may also be combined with each other, ending up with a method for serving user requests in which a given user request is in each case modeled and/or represented in an abstract way and in which new functionalities of combinations of distinct and single devices existing in the network may be derived and represented in an abstract way.

According to a preferred embodiment of the inventive method for serving user requests at least one step or one sub-process of deducing at least one functionality of at least one combination of a single and individual device and/or of subsets thereof is performed, which is in particular not a functionality of one of said single and individual devices. Therefore, new functionalities which are not apparent from the plurality of single and individual devices with their functionalities may be obtained, thereby yielding a kind of a virtual device as said combination of single and individual devices.

Function models are preferably employed, in particular for each device in the network, in global form and/or in steps of deriving, storing and/or employing device information data, action information data, and/or the like.

It is also preferred to chose in the inventive method each of said function models to be built up by and/or to contain at least one external model which in particular models and/or describes data being transmitted to a respective device or device class or which models and/or describes input data. Alternatively or additionally, each of said function models can be chosen to be built up by and/or to contain at least one external model which in particular models and/or describes data being transmitted from a respective device or device class or which models and/or describes output data. All this may be done in particular in dependence on the particular functionality which is employed and/or in particular for finding appropriate devices for serving a given user request.

Additionally or alternatively, each of said function models may be chosen to contain an internal model, in particular as a finite state automaton, or the like and/or in particular being descriptive for possible states, for possible transitions between states, for possible actions to initialize said state transitions for a respective device and/or the like, in particular for generating plans for controlling respective devices and/or device classes.

It is also preferred that for at least one device or device class said internal model comprises states with preconditions and/or with post-conditions, which, in particular, describe necessities of employing at least one additional device and/or one additional device class.

It is of a further advantage when according to said input data and/or said output data a connection, an assignment, and/or the like between internal and external models is established.

Said function models may be chosen so as to contain a connection model, being representative for possible connections between involved devices.

Preferably, according to a further embodiment of the present inventive method for serving user requests for each device and/or device class a plurality of external models is generated, provided and/or employed.

Further preferably, elementary external models are employed as said external models, at least comprising information on input data, on output data, and/or on at least one elementary process or service connecting said input data to said output data.

It is of a further advantage to generate, provide, and/or employ for each given task derived from a received user request at least one sequence of elementary tasks, in particular, as a set of models for said given task and/or in particular connecting the input data of the given task with the output data of the given task.

Preferably, from a provided or generated plurality of sequences of elementary tasks belonging to a given task a certain member is chosen as a model for said given task which fulfills given complexity requirements and/or reliability requirements.

With the last described measures a complex task or a complex user request may be split up into a sequence of a variety of elementary tasks according to which the input data of the user request or the given task and the output data thereof are connected. Accordingly, said input data and output data belonging to a user request may be connected by different sequences of elementary tasks. For instance, the user request "Listening to Madonna's most recent single hit" may be fulfilled by receiving said single hit from a video stream obtained from a TV-receiver, a video stream obtained from the internet, a video stream obtained from DVD or CD-ROM, of from an audio stream obtained from CD, audio tape, from a broadcast receiver, from a minidisk. Therefore, different sequences of elementary tasks may be combined to fulfill and serve a given user request and it is a question of reliability, complexity, and costs which sequence is most appropriate.

In the method for serving user requests with respect to a network of devices, or the like, in particular for controlling said network of devices, it is further preferred that an user request is received and/or processed, thereby generating, and/or storing and/or employing request information data being representative for said user request. Additionally, device information data are generated and/or stored containing information at least of units and/or devices being necessary and/or appropriate with respect to said user request and/or being available for said man-machine-interface unit and/or containing information of possible states of said units and/or devices. Further, action information data containing information in accordance with said request information data, with respect to said device information data, and/or the like, about sequences of actions being appropriate with respect to said user request are generated and/or stored. Therefore, device information data are stored, containing information on the functionalities and the current states of all units/devices being available for e.g. a man-machine-interface. Given said request information data and said device information data action information data about sequences of actions being appropriate with respect to said user request are generated and stored.

Finally, at least one of said sequences of actions in accordance with said action information data is performed, so as to adequately respond to said user request.

It is therefore a basic idea of the inventive method to first receive and analyze a user request, and to derive therefrom request information data which describe and characterize the user request. From the received user request and the derived request information data it is decided which of the devices are appropriate and necessary for serving the request. Therefore, device information data are derived. That means, given the received user request and derived request information data, the device information data, which is stored, is used to decide which of the devices are appropriate and necessary for serving the request.

Then, a plan as a sequence of actions being appropriate with respect to the user request is constructed using the device information data of the appropriate and necessary devices for serving the request. Therefore, action information data are generated and stored, based on which at least one of said sequences of actions is carried out or executed to respond to said user request in an adequate form.

The invention may be embedded in a dialogue system, which consists of a speech or utterance recognizer, an understanding part, a dialogue manager, and a part realizing the inventive method.

In the context of the invention a user request is said to be complex if it is not a simple device instruction and/or if several devices are necessary to serve the request.

In contrast to prior art methods, the inventive method for serving user requests with respect to a network of devices is capable of serving complex user wishes or complex desired tasks, in particular in the case where a direct mapping of an order uttered by a user is not possible. For instance, the order "start CD-player" can be mapped and executed directly by feeding a start signal to the input terminal of the CD-player. In contrast, the task "I want to listen to Madonna's most recent single hit" cannot be mapped and executed in a direct way, as neither the device, nor the action to be executed on the device, nor the data source are given within the wording of the task. These items have to be derived in advance of the execution step and the inventive method for operating a man-machine-interface unit is in particular capable of coping with such complex user wishes or tasks.

Therefore, according to a preferred embodiment of the present invention, a complex user request representing a user's wish, a desired task, service, device and/or the like or a sequence or set thereof is received as said user request, in particular involving several necessary devices of said network.

A further idea is to receive in general a user utterance as an input, in particular in multimodal form, e.g. including acoustical components, gesture, facial expression and/or the like. A multi-modal user input as an utterance comprises components with several modalities.

According to a preferred embodiment of the inventive method for serving user requests with respect to a network of devices a user utterance or input, e.g. a speech input, is received as said user request. Speech is the easiest way for a user to utter a desired task, as already mentioned above.

The step of processing said user request comprises a step of recognizing and/or understanding said user request and in the case of a spoken user request a step of speech recognition, especially combined with a step of user identification.

It is a benefit of the invention to generate an abstract representation for said user request.

In accordance with another preferred embodiment of the inventive method for serving user requests with respect to a network of devices said request information data are generated so as to contain primary data source information, primary data target information and/or primary action information.

Said primary data source information contains information on possible data sources for primary data to be received or to be generated. The primary data source information in the case of the above-mentioned task "listening to Madonna's most recent single hit" may contain information about a CD-player, a tape recorder, a broadcast system, or the like for providing the primary data, i. e. respective sound data of said most recent single hit of Madonna. Said primary data target information could contain in the above-mentioned case information about an amplifier unit and a loudspeaker unit of the network to which said data for an acoustical output of the respective song can be directed. The primary action information would be derived from the task component "listen to" and would contain information about a reproducing mode or playing mode of the respective devices.

In the above-mentioned case and similar cases primary data sources are devices which can provide data, e. g. sounds, video streams, or the like. Data targets are therefore devices to which the information or service from the data sources are transmitted to, e. g. a loudspeaker unit, a recording device, a displaying device, or the like. Finally, the action information describes actions to be taken on the data sources and the data targets to realize the transmission and transition of data between source and target.

Therefore, according to a preferred embodiment of the inventive method said primary data source information is generated so as to contain information at least indicating possible or potential sources of requested data and/or services. Further, said primary data target information is generated so as to contain information at least indicating possible or potential targets for requested and/or derived data and/or services. Furtheron, said primary action information is generated so as to contain information containing at least indicating possible or potential actions to be performed on requested and/or derived data and/or possible services.

In a particular advantageous embodiment of the inventive method said device information data are generated so as to contain device functionality data, in particular describing and/or representing possible functionalities of each device, and/or device status data describing and/or representing an initial, current and/or final statuses or states of at least said necessary and/or said appropriate devices.

It is preferred to employ a dialogue system, section, algorithm, or the like, in particular in the steps of deriving, storing and/or employing such device information data, said action information data, and/or the like.

It is further preferred to employ a planning module, section, algorithm, or the like, in particular as a part of said dialogue system, section, algorithm, or the like, and/or in particular containing function models, state models and/or a reasoning component. The planning module, section, algorithm, or the like may be capable of generating plans and/or strategies by reasoning on abstract models of single and/or individual devices and/or of device classes as well as on abstract and virtual device models for distinct and/or combined single devices.

According to a further preferred embodiment of the inventive method in the step of deriving said device information data, a device search algorithm is employed, in particular using said external models.

It is advantageous in accordance with another embodiment of the present invention to employ in the step of deriving said device information data a state search algorithm, in particular using said internal models and/or said state models.

It is preferred that said device search algorithm and/or said state search algorithm are capable of and/or are employed for deducing functionalities of combined single devices in the network and/or for participating in the process of generating said virtual device models.

Furtheron, in the step of deriving said action information data, an action search algorithm may be employed, in particular using said internal models and/or said reasoning component.

For executing a found plan, and therefore for responding to an user request an action performing algorithm may be employed, in particular in the step of performing one of said sequences of actions.

It is a further aspect of the present invention to provide a network of devices, a man-machine-interface unit and/or a system, an apparatus, a device, and/or the like for operating the same which is in each case capable of performing and/or realizing the inventive method for serving user requests with respect to a network of devices and/or the steps thereof.

Additionally, it is a further aspect of the present invention to provide a computer program product comprising computer program means which is adapted to perform and/or to realize the inventive method for serving user requests with respect to a network of devices and/or the steps thereof, when it is executed on a computer, a digital processing means, and/or the like.

The above-mentioned and further aspects of the present invention will become more elucidated taking into account the following remarks:

The problem to be addressed with the present invention is to enable a method and/or a system for operating a man-machine-interface unit, and in particular a dialogue system, to serve complex user wishes, requests and/or tasks.

Instead of controlling devices directly, the user is allowed to ask the system to serve complex tasks which may include the use of several devices.

It is one aspect of the present invention to describe and model functionalities of each single and individual device in an abstract way. According to a further aspect of the present invention also a user request is as a complex task modeled and described in an abstract way. Using these abstract descriptions the method and the system using the method are enabled to deduce functionalities of combinations of single and individual devices and/or of the overall system which exist due to combinations of several devices. The deduced functionalities are not functionalities of one single and individual device.

According to a further aspect of the present invention in addition to those functionalities provided by single devices, the overall system also provides functionalities due to the combination of several and individual devices. In order to realize complex user wishes or user requests these functionalities are also modeled, in particular by formally merging the individual and single models for individual and single devices. Therefore, virtual device models are yielded with respect to combinations of single and individual devices and/or with respect to the overall system.

The functionality of each device may be described by a finite state automaton. Given a complex user request, the following steps are to be automatically performed in order to serve the request: Search for appropriate and necessary devices; search for current and required states of each involved device; search for a plan or a sequence of actions to bring each device from a current state to the required state; perform the plan.

Conventional dialogue systems in man-machine-interface units which are used for controlling devices or networks of devices usually consist of an input recognition part, an input understanding part, a dialogue manager, and the devices to be controlled. Simple user requests can be performed by mapping the user input uniquely and directly to the appropriate control command.

Given e. g. a speech input "CD play", conventional systems uniquely can map this user request to the play command of a CD-player.

The main lack of most known user interfaces of traditional dialogue system is the necessity for the user to think in terms of devices, services and applications.

As an example consider the task "record the film XYZ". In this case the user might first use an EPG, i.e. an Electronic Program Guide, in order to find out the appropriate channel, starting time and duration. Then, the user needs to program the VCR himself.
According to the invention, the user is enabled to submit a (multi-modal) request to a system in terms of the task, as he would do in communication with a human assistant or counterpart. This means that the user asks the system to "record the film XYZ". Then the system in accordance with the invention itself has or derives the knowledge about how to find the appropriate channel, starting time and duration, for instance by using an EPG and then how to program the VCR automatically.

In a network of devices and applications, there are functionalities provided by single and individual devices. In addition, there are also functionalities provided by combinations of single and individual devices and further by the overall system due to the combinations of all devices. For instance, a new functionality "copying from one video recorder to another video recorder" or "copying an audio signal of a video stream to a minidisk" may be built up. In a respective complex user wish including at least one of these functionalities the user conventionally himself needs to know about how to combine given and individual several devices in order to fulfill the task. The user first needs to know how to control first and second video recorders in order to copy a video stream from one device to the other. Instead, the user should ask the system to fulfill the task in its entirety, the user should ask the system to "copy this video".

One problem to be addressed by the invention is therefore to model complex tasks and functionalities in an abstract way such that the system and the method are enabled to deduce functionalities of combinations of single and individual devices and/or of the overall system if abstract models of said single and individual devices and applications are given. The method and the system are enabled to be more flexible since functionalities provided by an ensemble of devices are not strictly related to special devices but to the functionalities of the devices.

A further problem addressed by the invention is to fulfill complex tasks which involve several devices. For this purpose it is proposed to use not only individual abstract models for each single and individual device, but in addition to formally merge the individual models of the devices. This yields virtual device models which model the functionalities due to the combinations of several devices.

A further problem to be addressed by the invention is the process of enabling a flexible and intuitive control and operation of devices, applications, and services by enabling the user to ask for complex tasks and to utter complex wishes instead of controlling single devices. Given a complex request, the inventive method for serving user requests with respect to a network of devices automatically recognizes the meaning of the request or wish, derives the necessary information concerning necessary devices and takes appropriate actions to respond to the request or wish.

In a preferred embodiment of the inventive method the following steps are included:
1. Searching for appropriate and necessary devices to serve the complex user wish.
2. Searching for current and required states of each of the involved devices.
3. Searching for a plan or a sequence of actions to bring each device from the current state to the required one.
4. Performing the plan or executing the sequence of actions.

This algorithm may be performed automatically by an appropriate inventive system. There is no need for further user input to trigger the use of different devices.

In the following the example of the home network may be considered, consisting for instance of a TV, VCR, a Set Top Box (STB), an EPG (Electronic Program Guide), and minidisk recorder (MDRec). The man-machine-interface unit (MMI) includes a dialogue system. In prior art dialogue systems the given devices are controlled directly and separately by the dialogue manager.

For this purpose conventionally individual models of the functionalities of the single and individual devices are sufficient. The user's wish can be modeled in terms of devices, that is, for instance, by mapping the user's speech input "record" or the like directly to the control command "record" of the video recorder.

In contrast, it is an idea of the present invention to model both, complex tasks and functionalities of devices in an abstract way, such that the system is able to deduce functionalities of the overall system from the given abstract models of the devices. This includes especially functionalities which only arise due to the combination of devices and/or applications. Therefore, the overall system can be seen as comprising several devices and applications but also virtual devices providing new functionalities. Furthermore, functionalities are not strictly related to devices.

It is a further idea of the present invention to model functionalities which arise due to the combination of individual and single devices in an abstract way. Given abstract models of the single and individual devices this can be done by formally merging the abstract models of the combined devices. By doing this, a virtual device model is obtained, which models functionalities which are provided by a respective combination of those devices the models of which have been merged.

A further idea according to the invention is to introduce a new module into said dialogue system. This new module is called planning module. The planning module may consist of an abstract model of the functionalities or of possible functions of each device (so-called functional models), and in particular for each device in the network. Furtheron, the planning module consists of an administration of the current state of each device and of a reasoning component, based on the functional models. This newly introduced model enables the system or the method for operating a man-machine-interface unit to serve complex user wishes instead of forcing the user explicitly to use devices and combine them.

The functional model of a device consists of two parts. The first part is an external model describing the in- and outgoing data with respect to the device. The second part is an internal model, for instance a finite state machine, a finite state automaton, or the like, describing the possible states of the device and their actions which may lead to state transitions. In addition, the states are annotated with in- and outgoing data.

E.g., in order to serve complex user requests like "record the film XYZ", the following steps need to be performed by the planning module: Finding out which devices are necessary to service the request (in the above-mentioned case an EPG and a VCR); finding out how the devices may be controlled.

The reasoning component of the planning module of the invention consists of:
1. An algorithm for the search of appropriate and necessary devices (device search algorithm). This is done by using the external models.
2. An algorithm for the search for the state of each of the involved devices, which need to be reached in order to serve the request (state search algorithm). This is done by using the internal model (i.e. the finite state automaton).
3. A planning algorithm to search for a plan or a sequence of actions to bring each of the involved devices from the current state to the required state.
   This is done by using the internal model of each involved device.
4. An algorithm to perform the plan or to perform the sequence of actions (performing algorithm).

The inventive method includes at least in part the use of the following aspects:
- an abstract model of the functionalities of each single device in the network,
- abstract models describing complex tasks,
- a formalism how to merge individual models of single and individual devices,
- a search algorithm for deducing functionalities of combinations of individual and single devices and/or of the overall system provided by combinations of devices/ applications,
- a planning algorithm for generating plans and/or strategies by reasoning on both, the individual as well as the virtual models,
- a device search algorithm in order to find out which devices are necessary to serve a complex user request,
- a state search algorithm and a planning algorithm in order to find out how to control the devices, and
- a performing algorithm in order to control the devices as the generated plan requires.

It has to be noted, that the method for deducing functionalities of the overall system by using abstract models of complex tasks and functionalities of devices is not necessarily dependent on the formalism of external and internal models as well as on the formalism of finite state machines. Furthermore, the invention is not restricted to consumer electronics, but also may be applied to other devices like telephone, email-service, etc. The used man-machine-interface unit does not necessarily need to be a dialog system. The inventive method also enables the system to deduce functionalities of the overall system which are due to newly integrated devices into the network. It is further emphasized that the inventive method can also be applied to services of tourist information data basis or the like.

Instead of controlling single and individual devices directly and separately by a man-machine-interface unit or a dialog manager as in prior art dialog systems, the invention allows to model complex tasks as well as functionalities of individual devices in an abstract way. The invention also allows to model functionalities which are provided by a combination of single and individual devices.

Further, the invention allows to formulate the requests given by the dialogue manager on a very abstract level. The execution of the request finally is performed by the planning module. The invention has the following advantages compared with prior art dialogue systems:
- The user can ask for solving complex tasks.
- The user does not need to think in terms of devices and control each device separately to fulfill a complex task.
- The system deduces which functionalities are provided by the overall system. This especially includes functionalities which are provided only by a combination of devices. Thereby, virtual devices are provided.
- Resolving a specific complex task is not related to unique combination of devices. Instead, since the models of the task as well as the models of functionalities are abstract, the system combines devices depending on their functionalities and availability.
- Since the system is capable to deduce functionalities of the overall system, the invention supports plug- and play features.
- The individual models can be used either individually as well as for being merged by formulating conditions concerning the merge of individual models. This allows the system to be much more flexible in terms of the user input. Depending on the user input the system may use one or several devices in order to fulfill the task.
- The system itself searches for the devices, which are necessary to perform a given user request, i.e. the user does not need to think in terms of devices, but can think in terms of tasks and wishes.
- The dialogue manager is independent from the real devices and robust against changes of them.
- There might be several possible constellations of devices to serve a user request. With the device search algorithm the system is able to detect them, i. e. the user request is not fixed to a specific constellation of devices.
- The overall functionality of the given devices does not need to be known to the dialogue manager but it is deduced from the functional models or the given devices.
- The system is flexible and robust against adding and removing of devices.

Basic principles and ideas may also be taken from the following aspects:
***

### Task models:

Task models are part of a planning module and model in an abstract way tasks, which also may be rather complex. The models are device independent, i.e. each task model does not force the system to use specific devices for fulfilling a task but to use devices which provide specific functionalities.

Within an algorithm of the inventive method, in a first step the complex task is mapped to a 2-tuple of in- and outgoing data.

Examples of complex tasks are, e.g., "want to watch the film XYZ" or "send a scanned document via email to Mr. Green".
- The task model of "want to watch the film XYZ" comprises the information of a viewable picture of the film XYZ. The planning component deduces that there are different possibilities to fulfill the task. The film may be given on TV, i.e., a tuner and a display are needed, or the film is recorded on a VCR, i.e., a tape, a tape drive and a display are needed, or the film can be found on a hard disc, etc.
- The task model of "send this scanned document via email to Mr. Green" comprises the information, that the scanned document (i.e., a file) needs to be passed to an email service and that the recipient is Mr. Green. The planning component deduces that depending on the available email services there need to be a format conversion. Furthermore, the address book of the sender needs to be accessed in order to get the address of Mr. Green. For accessing the address book, there might be an authentication necessary.

### Merging of functional models:

Problem: Given a device, there might be a state of the device, which depends on a functionality of another device. E.g.: Reaching the state "record" of a tape drive of a VCR only makes sense, if there is another device, providing some signal which can be recorded. This might be a tuner, but also might be another VCR, playing back a tape. The question is how to model these dependencies independently of specific devices.

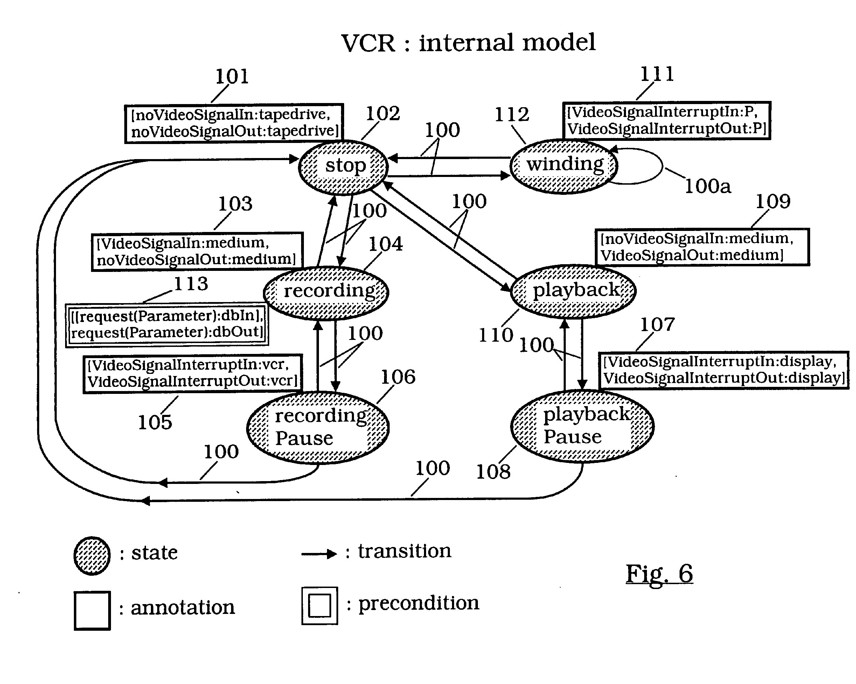

Solution: Given the internal model of the device, the specific state which depends on a functionality of another device (in our example this is the state "recording"), is annotated with preconditions or post-conditions (see Fig. 6). This annotation is in the format of an external model of another device (in our example in Fig. 6 it is the external model of another tape drive) or simply in 2-tuple of in- and outgoing data, which further on is handled like a complex task to be fulfilled. Note, that preconditions (post-conditions) also may be formulated as alternatives. Since the external model of a device does not necessarily point to a single device, but also may point to alternative external models and/or to an ordered set of external models (i.e., devices) the model still remains abstract and flexible, i.e., the pre/post-conditions refer to all functional models of devices, where the external model is equal to the pre/post-condition of the annotated state or to all ordered sets of external models, where pre/post-condition of the annotated state is equal to the first ingoing data of the sequence and the last outgoing data of the sequence. In that sense, several functional models are formally merged, i.e., the main internal models with all the internal models, referred to via the pre/post-condition.

Deducing functionalities of device combinations: Given a complex task, modeled through in- and outgoing data, the necessary devices are searched by searching a chain of devices, represented by external models, which are capable to handle the specified in- and outgoing data. This is done by searching through the external models. Such a combination of devices is considered as a virtual device. These virtual models built up of external models are models of combinations of devices, depending on the availability of devices, i.e., if there is a newly introduced device in a network, which provides a functionality, needed to fulfill a complex task, the system deduces from the external model, that the newly introduced device is capable to be used for this complex task. This means, given ordered sequences of external models, i.e., virtual devices, the algorithm is capable to deduce functionalities provided by the virtual model.

Adding and removing devices: Since the function model - not the reasoning component and the task models - should be part of the device itself, the device provides the necessary information about its functionalities by plugging in. If it is removed, the functional model of the device is removed, too.

### General Aspects:

The invention comprises one or a combination of different methods to model functionalities provided by a combination of devices. Three methods are 1. combining models, in particular by using external models, 2. merging of models, and 3. modeling via an ordered set of external models.

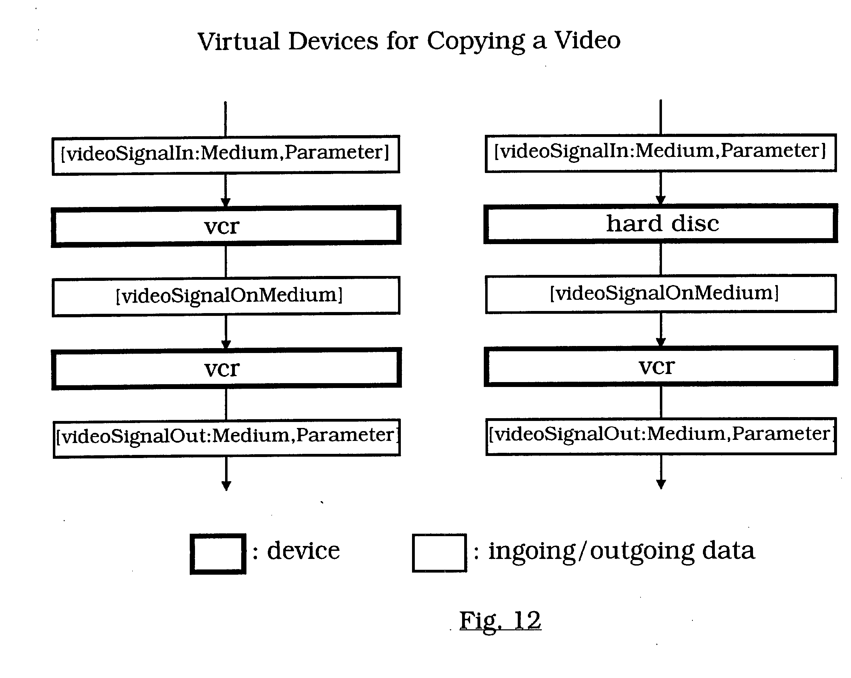

It is also important that these methods may be combined in order to solve one complex user wish. This is the case if either a virtual device is considered where one of the components in addition depends on functionalities provided by further devices of if a device depends on the functionalities of a virtual device.
1. Merging of models: This concept allows to model dependencies between specific states of one device and functionalities of a virtual device.
2. The device search algorithm returns an ordered set of external models. This ordered set of external models establishes a model of a virtual device, which comprises a set of devices, but is not limited to one unique set of devices. That is, if there are several devices in the network, which provide the same functionalities needed for one complex task, alternative combinations may fulfill the task. In that sense the system is able to infer functionalities of combinations of devices, which are modeled as virtual devices. In Fig. 12 two virtual devices are depicted, where each of them is able to copy a video from one device to another. The first virtual device comprises two VCRs whereas the second consists of a hard disc and a VCR. If there are new devices added to a network, new virtual devices may come into existence.

The inventive method may comprise one or a plurality of the steps of
1. combining external models,
2. merging models, and
3. modeling via an ordered set of external models,
which allows to deduce functionalities of virtual devices.

The above-mentioned and further features and advantages of the invention will become more apparent from the following description taking into account the accompanying figures.
- **Fig. 1**: is a schematical block diagram showing an application of the invention within a home network.
- **Fig. 2**: is a schematical block diagram of an external model for an electronic program guide EPG.
- **Fig. 3**: is a schematical block diagram for a first internal model for an electronic program guide EPG.
- **Fig. 4**: is a schematical block diagram for a second internal model for an electronic program guide EPG.
- **Fig. 5**: is a schematical block diagram for an external model for a video recorder VCR.
- **Fig. 6**: is a schematical block diagram for an internal model for a video recorder VCR.
- **Fig. 7**: is a schematical block diagram for an internal model for a virtual device as a combination of the video recorder VCR and the electronic program guide EPG of Figs. 6 and 4, respectively.
- **Fig. 8**: is a schematical block diagram elucidating a preferred embodiment of the inventive method for serving complex user requests.
- **Fig. 9**: is a schematical block diagram of a dialogue system realizing an embodiment of the present invention.
- **Fig. 10**: is an embodiment for a reasoning component of a planning module involved in an embodiment of the inventive method.
- **Fig. 11**: is a schematical block diagram of a prior art dialogue system for controlling a home network.
- **Fig. 12**: shows virtual devices for a copying process.

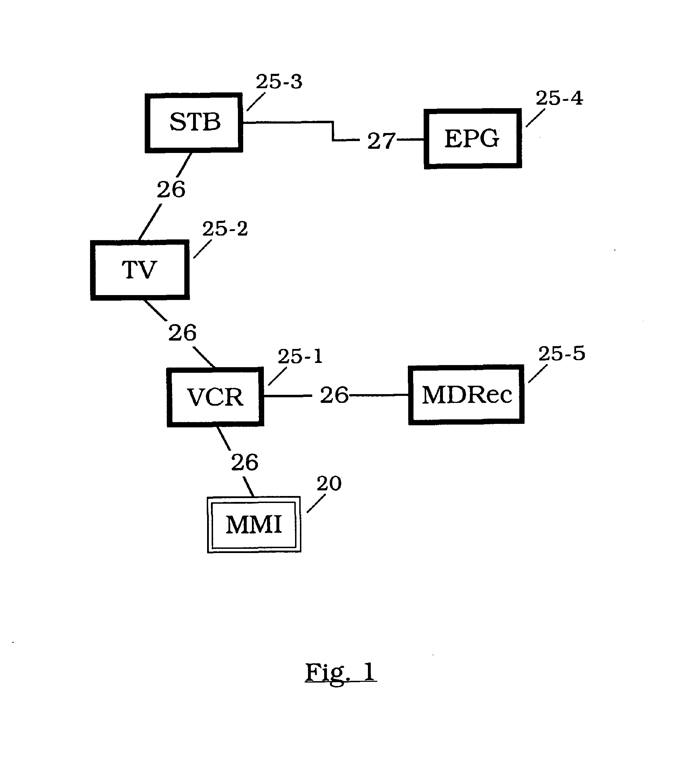

Fig. 1 describes by means of a schematical block diagram an application of an embodiment of the inventive method for serving user requests employing a man-machine-interface unit MMI 20 within a home network. To the man-machine-interface unit MMI 20 an arrangement of devices 25-1 to 25-5 is connected by means of adequate connections 26 and 27. In particular a Video Cassette Recorder VCR 25-1, a TV-set TV 25-2, a Set Top Box STB 25-3, an Electronic Program Guide EPG 25-4, and a minidisk recorder MDRec 25-5 are included in the home network system. The connection 27 between the network and the man-machine-interface MMI 20 may be built up by means of internet connection. The connections 26 may be built up as a bus system or an iLink/bluetooth system.

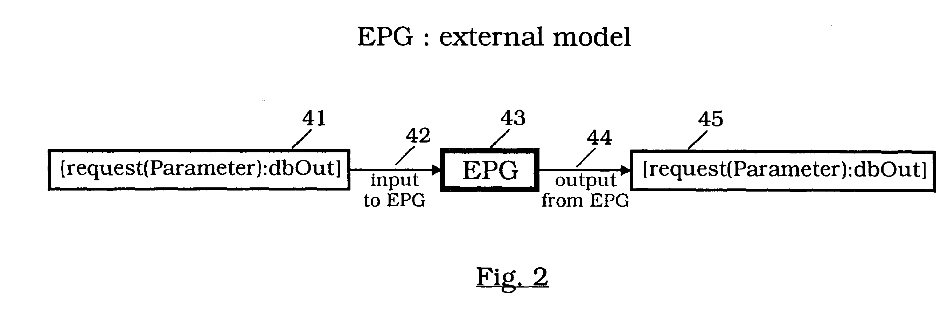

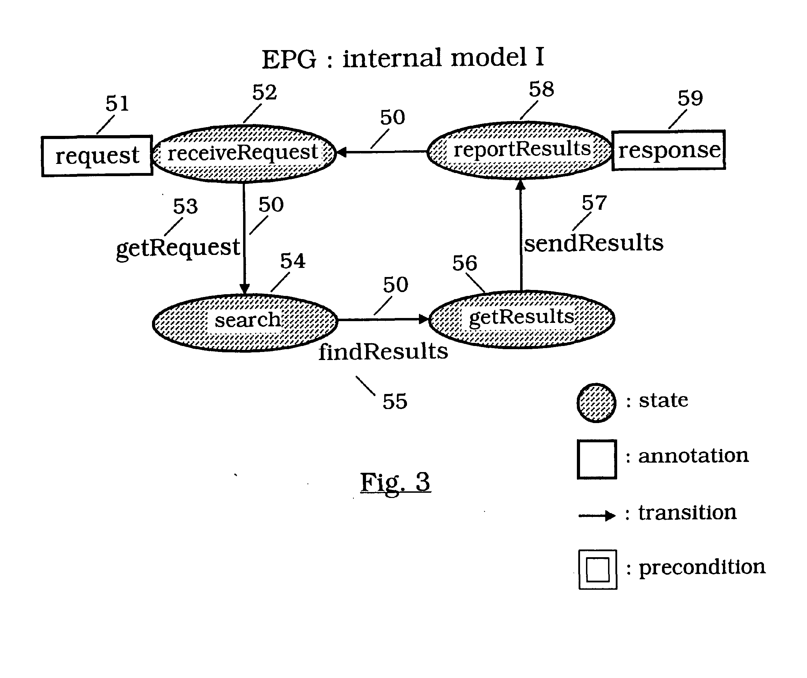

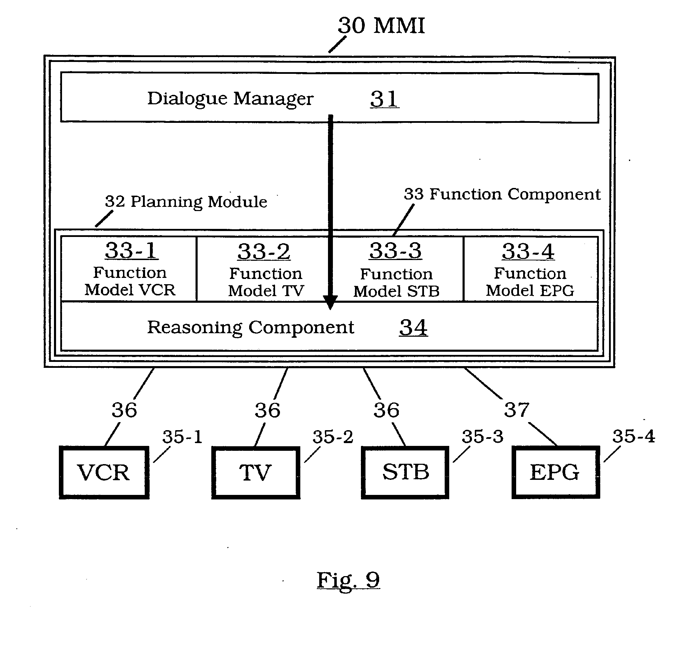

The structure of the function models 33-1 to 33-4 to be described in Fig. 9 is explained for the case of an electronic program guide EPG by means of schematical block diagrams according to Figs. 2 and 3.

Each of said function models 33-1 to 33-4 contains an external model and an internal model.

Fig. 2 shows an example for an external model for the EPG 35-4 of Fig. 1. The external model for the EPG consists of an annotated request information structure 41 and response information structural 45. The request information 41 is the input data 42 of an EPG, the response information 45 is the output data 44 of an EPG 43.

A first internal model of the EPG-device of Figs. 1 or 2 may be described by four different states 52, 54, 56 and 58 corresponding to the states receiveRequest, search, getResults, and reportResults as shown in Fig. 3. These different states or modes are connected in a circular arrangement by respective transitions 50. The states receiveRequest 52 and reportResults 58 are annotated with a respective request information structure 51 and response information structure 59. The first three transitions are annotated with actions getRequest 53, findResults 55, and sendResults 57, which are to be performed in order to change the state.

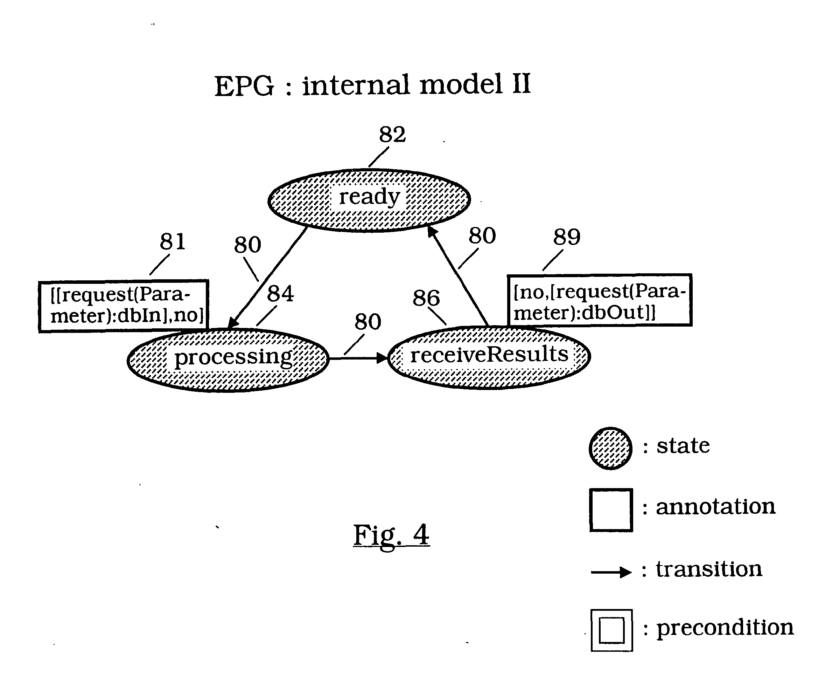

Fig. 4 demonstrates a second internal model for the electronic program guide EPG shown in Figs. 1 and 2. The second internal model for the EPG comprises three states 82, 84, 86 called "ready", "processing" and "receiveResults". respectively. These three states are arranged in a circular manner and they are connected via transitions 80. The state of processing is annotated with a input/output parameter structure 81, 89 [[request(Parameter):dbIn],no]. The state receiveResults is annotated with the input/output parameter structure 81, 89 [no,[request(Parameter):dbOut]].

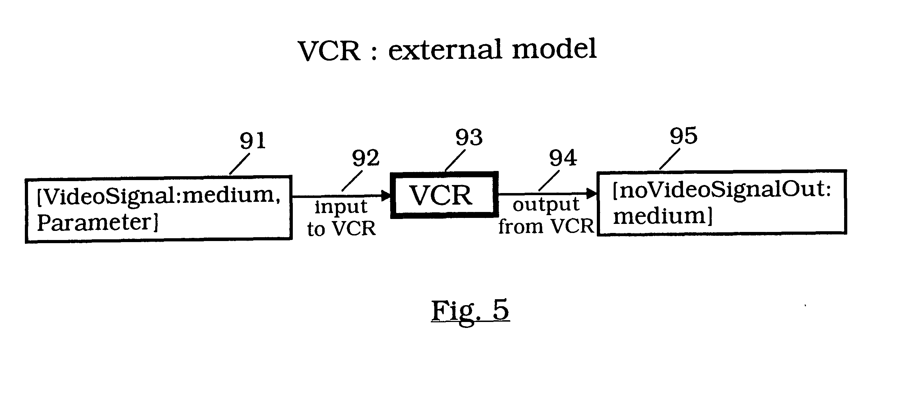

Fig. 5 shows by means of a schematical block diagram an external model for a videotape recorder VCR or 93 as shown in Fig. 1. Via data input processes 92 a input data structure 91 [VideoSignal:medium, Parameter] is input to the VCR 93. Via data output processes 94 respective output data with the structure 95 [noVideoSignalOut:medium] are output from the VCR 93.

Fig. 6 shows a schematical block diagram for illustrating a possible internal model of the videotape recorder VCR 93. In this internal model of Fig. 6 six different states or modes 102, 104, 106, 108, 110, and 112 called "stop", "recording", "recording pause", "playback pause", "playback", "winding" are given, which are arranged in a more complicated way by transitions 100, as not every state is connected with any other state. For instance, the modes of recording 104 and playback 110 are not connected to each other directly. Instead, one has to enter the stop mode 102 first before entering the playback mode 110 or the recording mode 104 when starting from the recording mode 104 or from the playback mode 110, respectively.

The notions mode and state are used equivalently here.

The stop mode 102 is directly and bidirectionally connected to the modes of recording 104, playback 110, and winding 112, and can be entered unidirectionally from the recordingPause mode 106 and the playbackPause mode 108. Further, the stop mode 102 has annotated an input/output parameter structure 101 [noVideoSignalIn:tapedrive,noVideoSignalOut:tape-drive].

The recording mode 104 is bidirectionally connected to the stop mode 102 and to the recordingPause mode 106, has annotated an input/output parameter structure 103 [VideoSignalIn:medium,noVideoSignalOut:medium] and further carries the precondition/post-condition structure 113 [[request(Parameter) :dbIn],request(Parameter);dbOut].

The recordingPause mode 106 is bidirectionally connected to the recording mode 104 and can be left to the stop mode 102. The recordingPause mode 106 carries an input/output parameter structure 105 [VideoSignalInterruptIn:vcr, VideosignalInterruptOut:vcr].

The playbackPause mode 108 is bidirectionally connected to the playback mode 110 and can be left to the stop mode 102. The playbackPause mode 108 carries an input/output parameter structure 107 [VideoSignalInterruptIn:display, VideoSignalInterruptOut:display].

The playback mode 110 is bidirectionally connected to the stop mode 102, the playbackPause mode 108 and the winding mode 112 and carries an input/output parameter structure 109 [noVideoSignalIn:medium, VideoSignal Out:medium].

The winding mode 112 is bidirectionally connected to the stop mode 102 and has a self-referencing transition 100a. Further, the winding mode 112 carries an input/output parameter structure 111 [VideoSignalInerruptIn:P, VideoSignalInterruptOut:P].

By combining the internal model for the VCR of Fig. 6 and the second internal model for the EPG of Fig. 4 a virtual device can be constructed as a combination of said VCR with said EPG, the internal model of which is a 'formally merged structure of the internal models shown in Figs. 4 and 6.

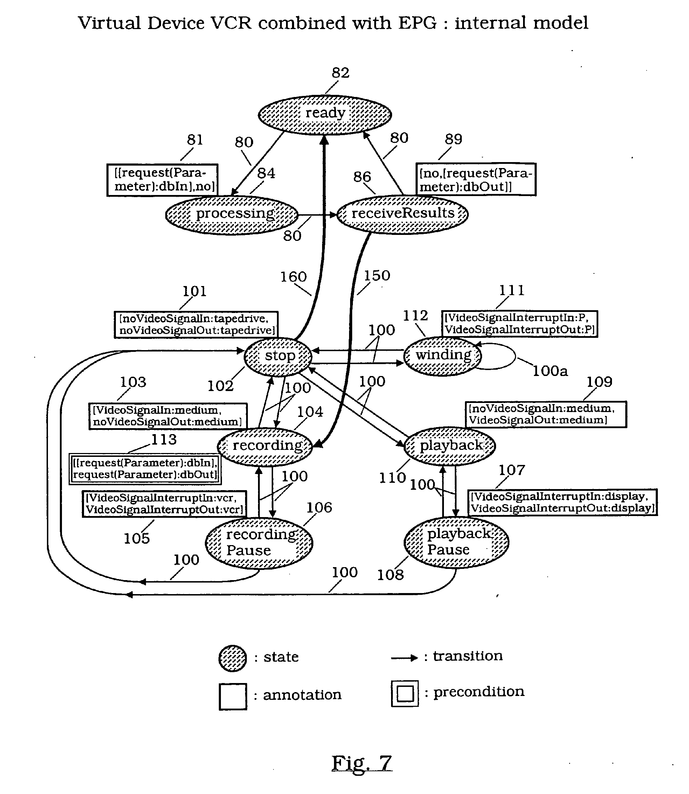

This formally merged structure describing an internal model for the virtual device VCR/EPG is shown by means of a schematical block diagram in Fig. 7. Clearly, the structures of the internal models of Figs. 4 and 6 can be seen; these models are not described in detail again at this point. Additionally, the combined or formally merged internal model for the virtual device VCR/EPG comprises further transitions 150 and 160 for connecting the respective internal models for the single and individual devices VCR and EPG.

The transition 160 connects unidirectionally the stop mode 102 with the ready mode 82.

Additionally, the receive result mode 86 is unidirectionally connected to the recording mode 104.

In Figs. 2 to 7 abstract models for a VCR and an EPG are shown. Each abstract model for each single and individual device is separated into an internal model and into at least one external model.

The external model models the in- and outgoing data of an individual and single device. The external model is used to find the appropriate devices for serving a user request. The modeling of the in- and outgoing data with respect to an individual and single device depends on the function which is used with respect to said individual and single device. The internal model describes in each case the individual and single device in more detail, in particular within the formalism of a finite state machine FSM. The internal model is used to generated plans and/or strategies for controlling the individual and single device.

It has to be emphasized that the in- and outgoing data in the external models establish the connection between the internal and the external models, as some of the states in the internal models are annotated with said in- and/or outgoing data.

Furthermore, some states of the internal model of the VCR may be annotated with preconditions and/or with post-conditions as is indicated in Fig. 6 by the precondition/post-condition structure 113 of the recording mode 104. In order to record a film the system needs at least to know about the channel and the starting time. This knowledge can be obtained by requesting an electronic program guide EPG as described in the preconditions with the format of the external model of the EPG, i.e., with the in- and outgoing data. However, if a knowledge about the channel and the starting time is already available in the system, there is no need to use EPG. This case may be modeled by additional annotations, which are for clarity reasons not shown in the figures.

Fig. 7 shows the virtual device model obtained by merging the individual models of the VCR and the EPG. The preconditions of the state or mode recording 104 in the internal model of the VCR may be formulated in the formalism of the external model of the EPG. Thus, the preconditions can be replaced by the entire internal model of the EPG such that an internal model of the virtual device consisting of a VCR and an EPG is obtained.

This virtual device, the internal model of which is shown in Fig. 7, is used to generate a plan or strategy in order to fulfill the complex task "record the film XYZ" in its entirety.

An abstract model for the task "copying a video film" may have the following structure:
ModelFunction(copyVideo, [VideoSignalOnMedium(Para1)],
   [VideoSignalOnMedium(Para2)]).

Given this model the system search through the external models of the given devices and deduces using the external and internal models of the VCR, that the overall system provides the functionality "copying a video film" by using two VCRs, since the ingoing data in the state playback 110 is VideoSignalOnMedium (Paral) and the outgoing data in the state playback 110 is VideoSignalOn-Medium(Para2). One of the videotape recorders VCR needs to be brought into the state recording 104, while the other has to be brought into the state playback 110. Since one single device cannot be in different state at the same time, it is easy to infer that in the above-mentioned example two videotape recorders VCR are needed. However, the abstract model of the task not necessarily enforces the system to use VCRs in the order to fulfill the task. Instead, the system may search for a device which provides, for instance, the functionality "playback a video stream from a medium X". This might be any device. Therefore, the system is made flexible in the sense that fulfilling a complex task may be realized using different combinations of devices available in the network or the system.

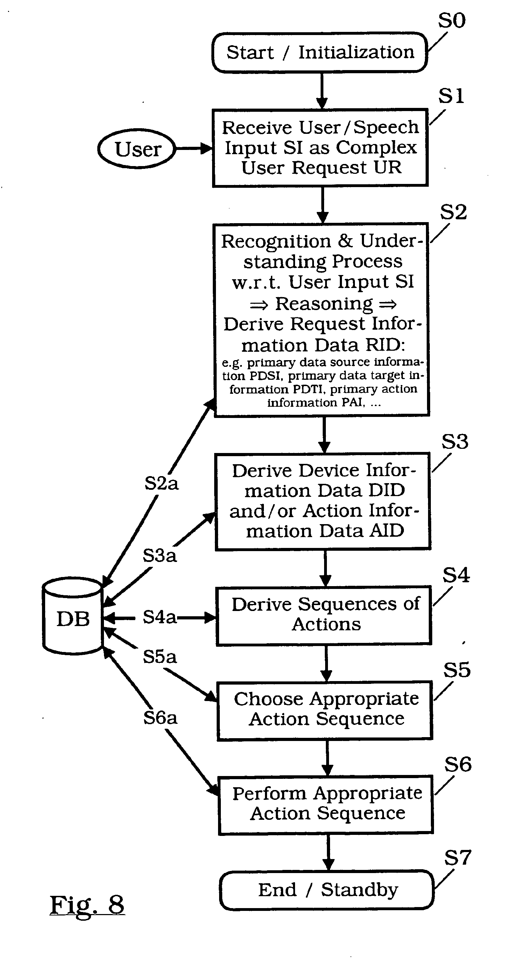

By means of a schematical block diagram Fig. 8 shows a further embodiment of the inventive method for serving user requests with respect to a network of devices and in particular a method for operating a man-machine-interface unit MMI.

In preliminary step S0 the method or system is started and initialized.

In a first step S1 a speech input SI is received as a complex user request UR.

In the following step S2 a process of recognizing the utterance or user request is applied to the user input SI to evaluate the user request UR, followed by a process of understanding and thereby deriving request information data RID, and in particular primary data source information PDSI, primary data target information PDTI and primary action information PAI. This process may be supported by a link S2a to a database DB.

In the following third step S3 from the request information data RID device information data DID and action information data AID are derived, which may be supported by taking reference to a database DB according to step S3a.

In the following fourth step S4 appropriate sequences of actions are derived which may serve as an adequate respond to the user request UR.

The following fifth step S5 performs an evaluation on the derived sequences of actions and chooses the most adequate particular action sequence, this process may be performed taking reference again with a database DB according to step S5a.

Then, the chosen action sequence is performed, carried out or executed.

In a final step S7 a method returns to the initial step S0 or remains in a stand by mode.

Fig. 9 shows by means of a schematical block diagram in more detail the connection between a man-machine-interface unit MMI 30 and a home network built up by a VCR 35-1, a TV 35-2, a STB 35-3 and an EPG 35-4, which are connected by connections 36 and 37, respectively.

The MMI 30 of the embodiment of Fig. 9 contains a dialogue manager 31 combined with a planning module 32. The planning module 32 itself is built up by a model component 33 which contains function models 33-1 to 33-4 for each of the devices 35-1 to 35-4 and a reasoning component 34.

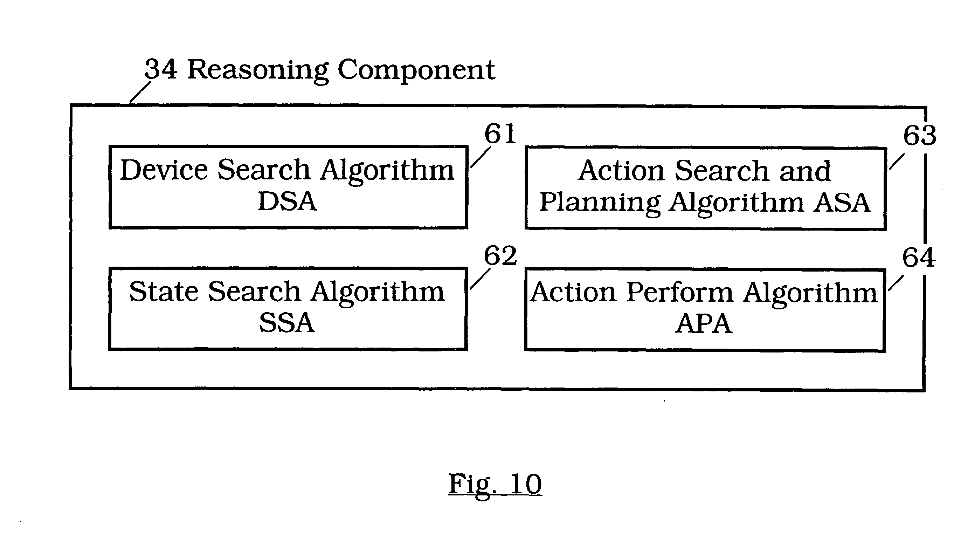

The schematical block diagram of Fig. 10 shows the structure of an example for a reasoning component 34 of a planning module 32 in a man-machine-interface unit MMI according to the invention and in particular according to Fig. 9. Such a reasoning component 34 consists of a device search algorithm DSA 61, a state search algorithm SSA 62, an action search or planning algorithm ASA 63, and an action performing algorithm APA 64.

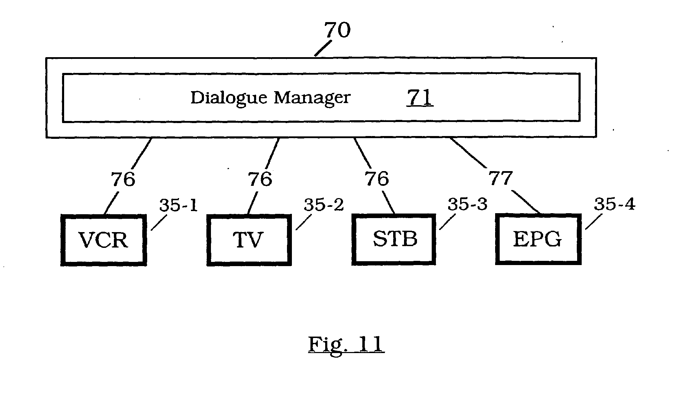

In contrast, prior art MMIs 70 as shown in Fig. 11 generally contain a single dialogue manager 71 and they are connected to the respective devices 35-1 to 35-4 via connections 76 and 77, respectively, without involving a respective planning module or a reasoning component.

## Claims

1. Method for serving user requests with respect to a network of devices and in particular for controlling said network of devices,
- wherein for each device and/or for device classes in the network at least one abstract and individual function model (33-1, ..., 33-4) is generated, provided, and/or employed for modeling for each of said devices and/or for each device class its functionalities in an abstract way,
- wherein a given user request is in each case modeled and/or represented in an abstract way by generating, providing, and/or employing an abstract task model thereof, and
- wherein a plurality of abstract and individual function models (33-1, ..., 33-4) of distinct devices is
• combined, in particular by using external models and/or
• formally merged and/or
• modeled via an ordered set of external models,
thereby yielding an abstract and virtual device model which models in an abstract way the functionalities of the combined models of the respective distinct and/or combined single devices.

2. Method according to claim 1,
wherein at least one step or one subprocess of deducing at least one functionality of at least one combination of single devices and/or of subsets thereof is performed, which is in particular not a functionality of one of the single devices.

3. Method according to any one of the preceding claims,
wherein function models (33-1, ..., 33-4) are employed, in particular for each device in the network, in global form and/or in steps of deriving (S3), storing and/or employing device information data (DID), said action information data (AID), and/or the like.

4. Method according to any one of the preceding claims,
wherein each of said function models (33-1, ..., 33-4) is chosen to be built up by and/or to contain at least one external model modeling and/or being descriptive for data being transmitted to a respective device or device class or for input data and/or for data being transmitted from a respective device or device class or for output data, in particular in dependence on the particular functionality which is employed and/or in particular for finding appropriate devices.

5. Method according to any one of the preceding claims,
wherein each of said function models (33-1, ..., 33-4) is chosen to be built up by and/or to contain an internal model, in particular as a finite state machine, finite state automaton, or the like and/or being descriptive for possible states, of possible transitions between states, of possible actions to initialize said state transitions of said respective device, device class and/or the like, in particular for generating plans for controlling respective devices or device classes.

6. Method according to claim 5,
wherein for at least one device or device class said internal model comprises states with preconditions and/or with post-conditions, which, in particular, describe necessities of employing at least one additional device and/or one additional device class.

7. Method according to any one of the preceding claims 4 to 6,
wherein according to said input data and/or said output data a connection, an assignment, and/or the like between internal and external models is established.

8. Method according to any one of the preceding claims,
wherein each of said function models (33-1, ..., 33-4) is chosen to contain a connection model being representative for possible connections between involved devices.

9. Method according to any one of the preceding claims,
wherein for each device a plurality of external models is generated, provided and/or employed.

10. Method according to claim 9,
wherein elementary external models are employed as said external models, at least comprising information on input data, on output data and/or on an elementary process or service connecting said input data to said output data.

11. Method according to any one of the preceding claims,
wherein for each given task derived from a received user request at least one sequence of elementary tasks is generated, provided, and/or employed, in particular as a set of models for said given task and/or in particular connecting the input data of the given task with the output data of the given task.

12. Method according to claim 11,
wherein from a plurality of sequences of elementary tasks for a given task a member is chosen as a model for said given task which fulfills given complexity requirements and/or reliability requirements.

13. Method according to any one of the preceding claims, comprising the steps of:
- receiving (S1) and/or processing (S1, S2) a user request (UR), thereby providing, generating and/or storing request information data (RID) being representative for said user request (UR),
- providing, generating (S3), storing and/or employing device information data (DID) containing information at least of units and/or devices being necessary and/or appropriate with respect to said user request (UR) and/or being available for a man-machine-interface unit for said network and/or containing information of possible states of said units and/or devices,
- providing, generating (S4, S5) and/or storing action information data (AID) containing information in accordance with said request information data (RID), said device information data (DID), and/or the like about sequences of actions being appropriate with respect to said user request (UR),
- performing (S6) at least one of said sequences of actions in accordance with said action information data (AID), so as to adequately respond to said user request (UR).

14. Method according to any one of the preceding claims,
wherein a complex user request representing a user's wish, a desired task, service, device and/or the like or sequence or set thereof is received as said user request (UR), in particular involving several necessary devices of said network.

15. Method according to any one of the preceding claims,
wherein a user utterance is received as an input (SI), in particular in multimodal form.

16. Method according to any one of the preceding claims,
wherein speech input (SI) is received as said user utterance, input (SI) or as said user request (UR).

17. Method according any one of the preceding claims 13 to 16,
wherein said step of processing (S1, S2) said user request (UR) comprises a step of recognizing (S2) said user request (UR) and in particular a step of speech recognizing.

18. Method according to any one of the preceding claims 13 to 17,
wherein said request information data (RID) is generated so as to contain primary data source information (PDSI), primary data target information (PDTI) and/or primary action information (PAI).

19. Method according to claim 18,
- wherein said primary data source information (PDSI) is generated so as to contain information at least indicating possible or potential sources of requested data and/or services,
- wherein said primary data target information (PDTI) is generated so as to contain information at least indicating possible or potential targets for potential or derived data and/or services, and/or
- wherein said primary action information (PAI) is generated so as to contain information at least indicating possible or potential actions to be performed on requested and/or derived data and/or for said services.

20. Method according to any one of the preceding claims 13 to 19,
wherein said device information data (DID) contain device functionality data (DFD), in particular describing and/or representing possible functionalities of each device, and/or device status data (DSD), in particular describing and/or representing initial, current, and/or final statuses or states of at least said necessary and/or appropriate devices.

21. Method according to any one of the preceding claims 13 to 20.
wherein a dialogue system (30, 31), section, algorithm, or the like is employed, in particular in said steps of deriving (S3), storing and/or employing said device information data (DID), said action information data (AID), and/or the like.

22. Method according to any one of the preceding claims,
wherein a planning module (32), section, algorithm, or the like is employed, in particular as a part of said dialogue system (30, 31), section, algorithm, or the like, and/or in particular containing function models (33-1, ..., 33-4), state models and/or a reasoning component (34).

23. Method according to claim 22,
wherein said planning module (32), section, algorithm, or the like is capable of generating plans by reasoning on abstract models of single devices and/or of device classes as well as on abstract and virtual device models for distinct and/or combined single devices.

24. Method according to any one of the preceding claims 13 to 23,
wherein in the step of deriving (S3) said device information data (DID) a device search algorithm (DSA) is employed, in particular using said external models.

25. Method according to any one of the preceding claims 13 to 24,
wherein in the step of deriving (S3) said device information data (DID) a state search algorithm (SSA) is employed, in particular using said internal models and/or said state models.

26. Method according to any one of the claims 24 or 25,
wherein said device search algorithm (DSA) und/or said state search algorithm (SSA) are capable of and/or are employed for deducing functionalities of combined single devices in the network and/or for participating in the process of generating said virtual device models.

27. Method according to any one of the preceding claims 13 to 26,
wherein in the step of deriving (S3) action information data (AID) an action search algorithm (ASA) is employed, in particular using said internal models and/or said reasoning component (34).

28. Method according to any one of the preceding claims 13 to 27,
wherein in the step of performing one of the sequences of action an action performing algorithm (APA) is employed.

29. Network of devices, man-machine-interface unit or the like or system for operating the same which is capable of performing and/or realizing the method to any one of the preceding claims 1 to 28 and/or the steps thereof.

30. Computer program product, comprising computer program means adapted to perform and/or to realize the method according to any one of the preceding claims 1 to 28 and/or the steps thereof, when it is executed on a computer, a digital processing means and/or the like.
